# EUROPEAN PATENT APPLICATION

(11) **EP 1 304 832 A1**
(43) Date of publication of application: **23.04.2003**
(21) Application number: 01440349.7
(22) Date of filing: 19.10.2001
(51) Int. Cl.: H04L 12/28, H04L 12/56, H04Q 7/38

(54) **Distributing available communication resources of a communication network depending on requests for QoS or non-QoS types of communication resources**

(71) Applicant: ALCATEL, 75008 Paris (FR)
(72) Inventor: Klein, Siegfried, Dipl.-Inform., 70437 Stuttgart (DE); Kaminski, Stephen, Dipl.-Ing., 75365 Calw (DE)
(74) Representative: Schäfer, Wolfgang, Dipl.-Ing.

(57) **Abstract**

A communication network is described which comprises a scheduler (25) for distributing available communication resources of the communication network to a number of requests for communication resources. QoS types (22) and non-QoS types (26) of communication resources may be requested. The communication network comprises a connection admission control (21) for providing a template (23) depending on the requests for QoS types (22) of communication resources. The distributon of the available communication resources is performed by the scheduler (25) depending on the template (23) and the requests for non-QoS types (26) of communication resources.

## Description

The invention relates to a method of distributing available communication resources of a communication network to a number of requests for communication resources wherein QoS types and non-QoS types of communication resources may be requested.

HIPERLAN/2 is a specification for a wireless communication of data within a communication network. In particular, HIPERLAN/2 is dedicated to build up a wireless local area network with a radius of about 50 meters. In a business environment, the local area network consists of an access point which communicates with a number of mobile terminals. As an example, HIPERLAN/2 may be used to establish a local area network with a number of notebooks in a building.

A description of HIPERLAN/2 is given in "HIPERLAN type 2 for broadband wireless communication", Jamshid Khun-Jush et al, Ericsson Review, No. 2, 2000, pages 108 to 119.

The HIPERLAN/2 specification provides for so-called MAC frames (MAC = medium access control) which represent the basic frame structure of the communication. All data to be communicated between the mobile terminals and the access point is transmitted within these MAC frames.

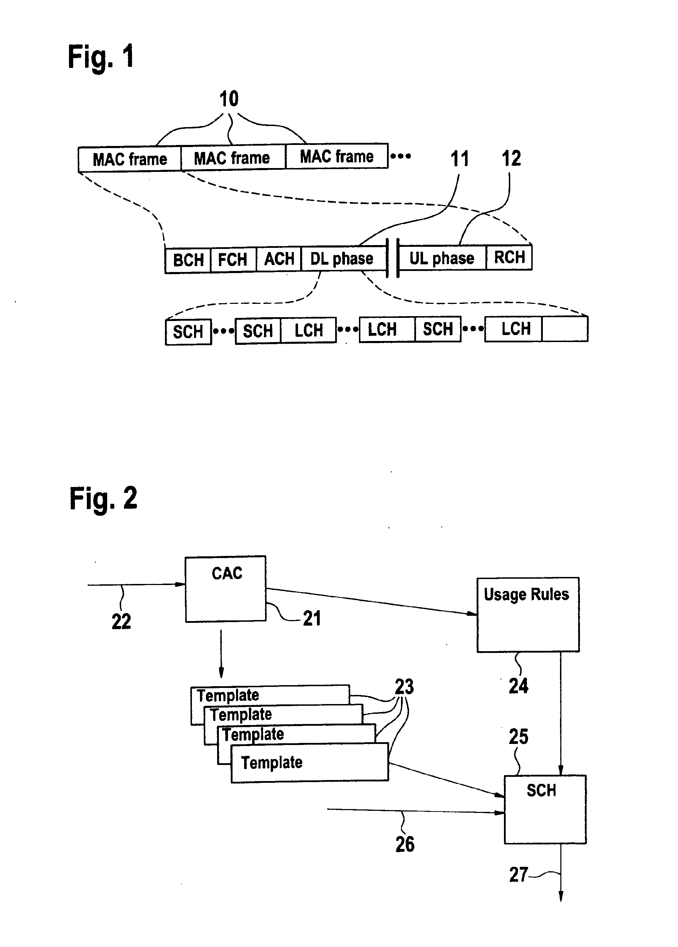

- Figure 1: shows a schematic representation of a MAC frame including its structure and contents.

Figure 1 shows 3 MAC frames 10. Any of the consecutive MAC frames 10 has a fixed duration of 2 milliseconds. Any of these MAC frames 10 has the following structure and contents.

A first part of the MAC frame 10 is a broadcast channel BCH which comprises general information and which is transmitted from the access point to all mobile terminals.

A second part of the MAC frame 10 is a frame channel FCH which comprises information about the structure and the contents of the rest of the MAC frame 10. A more detailed description of the functions of the frame channel FCH follows below.

A third part of the MAC frame 10 is an access feedback channel ACH. A more detailed description of the functions of the access feedback channel ACH follows below.

Then, the MAC frame 10 comprises a downlink channel and an uplink channel. The downlink channel comprises data which is transmitted from the access point to the mobile terminals. The uplink channel comprises data which is transmitted from the mobile terminals to the access point.

The duration of the downlink channel and the uplink channel within the MAC frame 10 is not fixed and depends on the available data to be transmitted. Therefore, these channels are represented in figure 1 as a DL phase 11 and an UL phase 12 with flexible durations.

A further part of the MAC frame 10 is a random access channel RCH. A more detailed description of the functions of the random access channel RCH follows below.

The DL phase 11 comprises so-called PDU trains (PDU = protocol data unit). Such a PDU train consists of a number of consecutive PDU's in the form of short channels SCH and long channels LCH. The short channels comprise control information and the long channels LCH comprise the data to be transmitted.

The DL phase 11 may include a number of PDU trains. However, any one of these PDU trains is directed to only one specific mobile terminal. The entire DL phase 11 and in particular the contents of the long channels LCH of its PDU trains is managed directly by the access point as it only includes data to be transmitted from the access point to the mobile terminals.

The UL phase 12 is dedicated to transmit data from the mobile terminals to the access point. Therefore, the access point must provide available communication resources for transmitting data to the respective mobile terminals. This procedure is now described in connection with a new mobile terminal which wants to transmit data to another mobile terminal.

In a first step, the new mobile terminal sends a setup request to the access point. There, the setup request is evaluated by a connection admission control (CAC) which in particular performs a registration of the connection to the new mobile terminal. The connection admission control (CAC) then sends a setup confirmation to the new mobile terminal.

Furthermore, the connection admission control (CAC) comprises a list of all active connections between the access point and the mobile terminals.

In a second step, the new mobile terminal sends a resource request to the access point requesting e.g. 100 PDU's for data transmission. This resource request is transmitted from the new mobile terminal to the access point within the random access channel RCH.

In a next step, the resource request is acknowledged in the access feedback channel ACH of the next MAC frame 10.

The access point comprises a scheduler (SCH) which distributes the available communication resources to the requesting mobile terminals.

In a further step, the scheduler (SCH) of the access point evaluates the resource request. Based on this evaluation, the access point sends a resource grant to the new mobile terminal granting e.g. 20 PDU's. This resource grant is transmitted from the access point to the new mobile terminal within the frame channel FCH of a subsequent MAC frame 10. The resource grant also includes the specific location of the granted 20 PDU's within the UL phase 12 of this subsequent MAC frame 10.

As a result, the new mobile terminal may transmit data within the granted 20 PDU's of the UL phase 12 of the mentioned subsequent MAC frame 10.

In a next step, the new mobile terminal sends a further resource request as described above. This resource request may already be transmitted within a short channel SCH (if any) out of the 20 PDU's of the UL phase 12 which have been granted to the new mobile terminal. Then further PDU's are granted to the new mobile terminal by the access point as described. This procedure is continued until the new mobile terminal has transmitted all data.

With the above described procedure, the available communication resources may be distributed dynamically to the requesting mobile terminals. Such communication resources may include resources for data transmission and/or resources for measurement purposes. The distribution is performed - as mentioned - by the scheduler (SCH) depending on the actual requests from the mobile terminals. A number of such requests may lead to delays until a specific mobile terminal is able to finish the transmission of all data to be transmitted. The above procedure therefore relates to the request of a so-called non-QoS type of a communication resource (QoS = quality of service).

HIPERLAN/2 also provides the possibility to request so-called QoS types of communication resources, in particular a so-called fixed slot allocation and a so-called fixed capacity agreement.

In connection with the fixed slot allocation, one or more PDU's within each consecutive MAC frame 10 are fixedly assigned to one specific mobile terminal. As well, the specific location of these PDU's within the MAC frame 10 is fixedly allocated. Therefore, the specific mobile terminal is able to send or receive data via these specific PDU's within every MAC frame 10 without any further request for communication resources or the like.

The fixed capacity agreement is similar to the fixed slot allocation. However, the specific mobile terminal does not obtain a fixed number of PDU's within every MAC frame 10. Instead, the specific mobile terminal does only obtain a fixed number of PDU's within a fixed number of MAC frames 10. As a result, the specific mobile terminal may only transmit data e.g. every second or every fourth MAC frame 10.

Both QoS types, i.e. the fixed slot allocation and the fixed capacity agreement, may be requested by any one of the mobile terminals. Additionaly, any of the mobile terminals may dynamically request communication resources as described above, i.e. non-QoS types.

In the prior art, all requests are sent to the access point and are evaluated and carried out by the scheduler (SCH) within the access point.

As described, any of the MAC frames 10 has a duration of 2 milliseconds. Therefore, the distribution and allocation of the available communication resources within any next MAC frame 10 to the requesting mobile terminals has to be evaluated by the scheduler (SCH) within these 2 milliseconds. Apparently, the more requests for communication resources are present and the more complex these requests are, the more time is needed by the scheduler (SCH) to perform the distribution and allocation of the available communication resources. This leads to an increase of the required processing power within the scheduler (SCH).

It is therefore an object of the present invention to provide a method of distributing available communication resources of a communication network to a number of requests for communication resources which does not require an increased processing power within the scheduler (SCH).

The invention solves this object by a method according to independant claim 1. The object is also solved by the subject matters of independant claims 7, 8, 9 and 10.

According to the invention, the distribution of the available communication resources is not carried out by the scheduler (SCH) alone, but partitioned between the connection admission control (CAC) and the scheduler (SCH). The construction of the templates and the usage rules being performed by the connection admission control (CAC), is not critial in time. Therefore, high processing power is not required. Due to the use of the templates and the usage rules, the distribution of the available communication resources being done by the scheduler (SCH), does also not require high processing power. As well, the time constraint to perform this distribution within the duration of every MAC frame 10 may be fulfilled without any additional effort.

Further embodiments and advantages of the invention are now described in connection with the enclosed figure 2.
- Figure 2: shows a schematic block diagram of an embodiment of the invention comprising the connection admission control (CAC) and the scheduler (SCH) as described in connection with figure 1.

As already described in connection with figure 1, the connection admission control (CAC) carries out all setup requests from new mobile terminals. Furthermore, the connection admission control (CAC) comprises a list of all active connections between the access point and the mobile terminals. This connection admission control (CAC) is indicated with the reference numeral 21 in figure 2.

The requests for communication resources of the QoS types are passed to the connection admission control 21. This is indicated by an arrow 22 in figure 2. These requests relate to the distribution of the communication resources according to the fixed slot allocation and the fixed capacity agreement.

Based on the received requests and on the active connections, the connection admission control 21 constructs one or more templates 23 for the distribution and allocation of the communication resources and defines one or more usage rules 24 for the use of these templates 23. The connection admission control 21 provides at least one "empty" template 23 with one corresponding usage rule 24 if there are no requests according to the fixed slot allocation or the fixed capacity agreement. It is also possible that a template 23 is provided without any corresponding usage rule 24, e.g. if this template 23 is presently unused.

As already described in connection with figure 1, the scheduler (SCH) performs the distribution and allocation of the available communication resources to the requesting mobile terminals. This scheduler (SCH) is indicated with the reference numeral 25 in figure 2.

As described, the requests relating to the fixed slot allocation and the fixed capacity agreement are passed to the connection admission control 21. The further requests for the dynamical allocation of communication resources, i.e. of the non-QoS type, are passed to the scheduler 25. This is indicated by an arrow 26 in figure 2.

As shown in figure 2, the distribution and allocation of the available communication resources to the requesting mobile terminals is carried out by the scheduler 25 with the help of the templates 23 and the usage rules 24.

In general, the scheduler 25 selects one of the templates 23 depending on the usage rules 24. This specific template 23 comprises all necessary information for the distribution and allocation of PDU's according to the fixed slot allocation and the fixed capacity agreement. The scheduler 25 then distributes the remaining non-allocated PDU's to the dynamically requesting mobile terminals.

As a result, the scheduler 25 establishes the information in the frame channel FCH of the next MAC frame 10 and sends it to the mobile terminals. This is indicated by an arrow 27 in figure 2. The mobile terminals may then transmit their respective data in the UL phase 12 of this next MAC frame 10 according to the information in the frame channel FCH.

For example, if a fixed slot allocation for two PDU's in every MAC frame 10 is requested from one of the mobile terminals, a corresponding first template 23 is constructed by the connection admission control 21 which includes the specific allocation of these two PDU's within the MAC frames 10. Furthermore, the connection admission control 21 defines the usage rule 24 that the aforementioned first template 23 has to be used for every subsequent MAC frame 10.

If, furthermore, a fixed capacity agreement for e.g 3 PDU's within the next 6 MAC frames 10 is requested from another one of the mobile terminals, a corresponding second template 23 is constructed by the connection admission control 21 which includes the specific allocation of the above described two PDU's according to the fixed slot allocation and three further PDU's for satisfying the described fixed capacity agreement. Furthermore, the connection admission control 21 defines the usage rule 24 that the second template 23 has to be used for every sixth subsequent MAC frame 10. This leads to the result that 3 PDU's are transmitted within the next 6 subsequent MAC frames 10.

The scheduler 25 then selects the respective template 23 in accordance with the usage rules 24. This means that the second template 23 is used for every sixth MAC frame 10 and that the first template 23 is used for all other MAC frames 10.

Based on the second template 23, the scheduler 25 creates the information in the frame channel FCH such that the communication resources are distributed and allocated according to the requested fixed slot allocation as well as according to the requested fixed capacity agreement. Based on the first template 23, the scheduler 25 creates the information in the frame channel FCH such that the communication resources are distributed and allocated only according to the requested fixed slot allocation.

In addition, the scheduler 25 distributes the remaining available communication resources of every MAC frame 10 depending on the dynamic requests coming in from the mobile terminals, i.e. according to the requests of the non-QoS types.

With every new request for communication resources and with every setup of a new mobile terminal, the connection admission control 21 deletes present templates 23 and usage rules 24 and creates new templates 23 and new usage rules 24. The same is valid whenever a requested transmission is finished or whenever a mobile terminal is turned off.

Such changes or modifications of the templates 23 and/or usage rules 24 may also be carried out based on other reasons.

The deletion and creation of templates 23 and usage rules 24 is independant of the duration of the MAC frames 10. In particular, it is not necessary that any change of the templates 23 or usage rules 24 is performed within 2 milliseconds. As well, the occurence of these changes has nothing to do with the duration of the MAC frames 10.

As a consequence, the required processing power for carrying out the changes of the templates 23 and the usage rules 24 within the connection admission control 21 is not high.

As described, the scheduler 25 only has to evaluate the usage rules 24 and to select one of the templates 23. On this basis, the scheduler 25 then has to distribute the remaining communication resources in accordance with dynamic requests. This means in other words that the scheduler 25 does not have to distribute the communication resources in connection with the fixed slot allocation or the fixed capcity agreement.

As a consequence, the required processing power for carrying out the selection of one of the templates 23 and the distribution of the remaining communication resources within the scheduler 25 is not high.

As well, due to the use of the templates 23, the scheduler 25 is always able to perform its required functions within the duration of the MAC frames 10, i.e. within 2 milliseconds.

## Claims

1. A method of distributing available communication resources of a communication network to a number of requests for communication resources wherein QoS types (22) and non-QoS types (26) of communication resources may be requested, comprising the steps of providing a template (23) depending on the requests for QoS types (22) of communication resources and distributing the available communication resources depending on the template (23) and the requests for non-QoS types (26) of communication resources.

2. The method of claim 1 comprising the step of providing a usage rule (24) for the template (23) and selecting the template (23) out of a number of templates (23) depending on the usage rule (24).

3. The method of claim 2 wherein at least one usage rule (24) is provided for every template (23).

4. The method of claim 1 comprising the step of providing information (27) relating to the distribution of the available communication resources.

5. The method of claim 1 wherein the requests for QoS types (22) of communication resources comprise a fixed slot allocation and/or a fixed capacity agreement.

6. The method of claim 1 wherein the requests for non-QoS types (26) of communication resources comprise a dynamic allocation.

7. A communication network with a scheduler (25) for distributing available communication resources of the communication network to a number of requests for communication resources wherein QoS types (22) and non-QoS types (26) of communication resources may be requested, comprising a connection admission control (21) for providing a template (23) depending on the requests for QoS types (22) of communication resources, wherein the distributon of the available communication resources is performed by the scheduler (25) depending on the template (23) and the requests for non-QoS types (26) of communication resources.

8. A scheduler (25) for distributing available communication resources of a communication network to a number of requests for communication resources wherein QoS types (22) and non-QoS types (26) of communication resources may be requested, the communication network comprising a connection admission control (21) for providing a template (23) depending on the requests for QoS types (22) of communication resources, wherein the distributon of the available communication resources is performed by the scheduler (25) depending on the template (23) and the requests for non-QoS types (26) of communication resources.

9. A connection admission control (21) for a communication network, the communication network comprising a scheduler (25) for distributing available communication resources of the communication network to a number of requests for communication resources wherein QoS types (22) and non-QoS types (26) of communication resources may be requested, wherein a template (23) is provided by the connection admission control (21) depending on the requests for QoS types (22) of communication resources, and wherein the distributon of the available communication resources is performed by the scheduler (25) depending on the template (23) and the requests for non-QoS types (26) of communication resources.

10. An access point of a communication network comprising a scheduler (25) and a connection admission control (21) according to claims 8 and 9.

11. The method of claim 1 or the communication network of claim 7 or the scheduler (25) of claim 8 or the connection admission control (21) of claim 9 or the access point of claim 10 wherein the communication network is a wireless local area network based on a HIPERLAN/2 specification.
